# EUROPÄISCHE PATENTSCHRIFT

(11) **EP 3 292 059 B1**
(45) Veröffentlichungstag und Bekanntmachung des Hinweises auf die Patenterteilung: **04.12.2019**
(21) Anmeldenummer: 16720834.7
(22) Anmeldetag: 04.05.2016
(51) Int. Cl.: B65G 67/20

(54) **ÜBERGABESTATION ZUM SCHNELLVERLADEN VON WARENPALETTEN, UND LOGISTIKSYSTEM MIT SELBIGER**
DELIVERY STATION TO QUICKLY LOAD PALLETS AND LOGISTIC SYSTEM COMPRISING THE SAME
STATION DE CHARGEMENT POUR CHARGER RAPIDEMENT DES PALETTES ET SYTEME LOGISTIQUE COMPRENANT LA STATION

(30) Priorität: 04.05.2015 DE 102015208192
(43) Veröffentlichungstag der Anmeldung: 14.03.2018
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser
(86) Internationale Anmeldenummer: PCT/EP2016/060016
(87) Internationale Veröffentlichungsnummer: WO 2016/177789

(56) Entgegenhaltungen:
- WO-A1-87/04140
- WO-A1-93/18992
- WO-A1-2014/111101
- DE-A1-102012 200 446
- JP-A- H11 199 058

## Beschreibung

Die vorliegende Erfindung betrifft eine Übergabestation zum Schnellverladen von Warenpaletten in einem Logistiksystem, insbesondere zum Schnellverladen von Warenpaletten zwischen einem Kommissionierplatz des Logistiksystems und einer Ladefläche eines Fahrzeugs, wobei die Übergabestation eine Warenpalettenaufnahme aufweist, die zur gleichzeitigen Aufnahme mehrerer aneinandergereihter Warenpaletten entlang einer Längsachse angepasst ist.

DE102010028821 offenbart eine Übergabestation zum Schnellverladen von Warenpaletten in einem Logistiksystem, mit
- einer Warenpalettenaufnahme, die zur gleichzeitigen Aufnahme mehrerer aneinander gereihter Warenpaletten entlang einer Längsachse angepasst ist,
- einem Antriebsportal, das in der Warenpalettenaufnahme in der Höhe und entlang der Längsachse verfahrbar ist,
- einer Plattform zum Erfassen der Warenpaletten, die entlang der Längsachse innerhalb und zumindest teilweise außerhalb des Aufnahmebereichs verschiebbar ist, wobei
- die Plattform einen ersten Endabschnitt und einen in Richtung der Längsachse gegenüberliegenden zweiten Endabschnitt aufweist, und in dem jeweiligen Endabschnitt einen Anschluss zum reversibel lösbaren Koppeln mit dem Antriebsportal aufweist.

WO87/04140 A1 offenbart ein Waren-Übergabegerät, insbesondere zum schnellen Transfer von pallerttierter Ware. Das Gerät umfasst einen Aufbau, der eine bewegbare Baugruppe stützt, welche eine Mehrzahl von Zinken enthält, und Hubmittel, die den

Zinken zugeordnet sind, um eine schnelle Übergabe der Ladung zu gewährleisten. Es wird vorgeschlagen, dass das Übergabegerät zusätzliche Sichtungsmittel zum Überwachen der Ausrichtung des Aufbaus aufweist, sowie seitliche Stützen zur Korrektur der Ausrichtung des Aufbaus, und ein zentrales Schwenklager, welches einen Querverschub des Aufbaus mittels ebener Rotation ermöglicht.

Logistiksysteme zum Handling von Waren sind allgemein bekannt und werden beispielsweise zum Warenumschlag von diversen Logistikkonzernen urngesetzt, um angelieferte Waren neu zu kommissionieren und zum Ausliefern an Abnehmer wieder verladen zu können.

Hierzu weisen die bekannten Logistiksysteme typischerweise ein Warenlager auf, in welchem eine oder mehrere Kommissionierplätze zum Zusammenstellen und Anordnen der zu verladenen Waren vorgesehen sind, sowie eine oder mehrere Andockstationen, an welche Fahrzeuge, Hänger von Fahrzeugen oder Wechselbrücken heranbewegt werden können, und in welche die Waren vom Kommissionierplatz aus hineingeladen werden können bzw. umgekehrt. Zum Verladen der Waren sind beispielsweise von der hiesigen Anmelderin sogenannte Übergabestationen bekannt, welche gleichzeitig eine Vielzahl von Warenpaletten aufnehmen können, um diese dann in einem Arbeitsgang in ein Fahrzeug verladen zu können.

Die bekannten Logistiksysteme bzw. die bekannten Übergabestationen, wie beispielsweise die Übergabestation aus EP 2602216 beruhen aber auf einem Logistikkonzept, welches Ladungsträger verwendet, die an die Maße der Ladefläche des zu beladenen Fahrzeugs angepasst sind. Alle Waren werden auf dem Kommissionierplatz zunächst auf diese Ladungsträger heraufbewegt, und werden dann durch Angreifen der Übergabestation an dem Ladungsträger in das Fahrzeug hineingeladen. Der Ladungsträger ist sowohl bauhöhen- aus auch platzoptimiert, um mit dem Fahrzeug mit transportiert werden zu können.

Die Nutzung dieser Transportlösung mit Ladungsträger hat sich in der Praxis bewährt und erzielt enorme Zeitvorteile beim Be- und Entladen der Fahrzeuge, so dass sowohl der Warenumschlag der Logistiksysteme als auch die Standzeit der Transportfahrzeuge an den Logistiksystemen drastisch verbessert wird.

Es gibt allerdings nach wie vor Logistikunternehmer, die, beispielsweise zum Ausschöpfen eines noch höheren Zuladegewichts oder aufgrund mangelnder Infrastruktur beim späteren Warenempfänger, auf den Transport der Waren auf den speziellen Ladungsträgern verzichten wollen oder müssen. Eine Branche, bei der beispielsweise die optimale Ausnutzung der Zuladung des Fahrzeugs besonders relevant ist, sind Getränkelieferanten.

Diese Kunden können nicht von den Synergieeffekten der bekannten Logistiksysteme und ihrer bekannten Übergabestationen profitieren, und müssen bislang konventionell be- und entladen werden.

Der Erfindung lag vor diesem Hintergrund die Aufgabe zugrunde, eine Übergabestation, ein Logistiksystem sowie ein Verfahren anzugeben, bei dem eine Schnellverladung von Warenpaletten auf auch solche Fahrzeuge möglich ist, die eine konventionelle Ladefläche (ohne Vorbereitung für spezielle Ladungsträger) aufweisen.

Die Erfindung löst die ihr zugrunde liegende Aufgabe, indem sie bei einer Übergabestation der eingangs bezeichneten Art ein Antriebsportal vorsieht, dass in der Warenpalettenaufnahme in der Höhe und entlang der Längsachse verfahrbar ist, sowie eine Mehrzahl von Kufen zum Erfassen der Warenpaletten, die entlang der Längsache innerhalb und zumindest teilweise außerhalb des Aufnahmebereichs verschiebbar sind, wobei die Kufen jeweils einen ersten Endabschnitt und einen in Richtung der Längsache gegenüberliegenden zweiten Endabschnitt aufweisen, und in dem jeweiligen Endabschnitt einen Anschluss zum reversibel lösbaren Koppeln mit dem Antriebsportal aufweisen.

Erfindungsgemäß wird hier der Ansatz verfolgt, dass die Paletten auf dem Kommissionierplatz derart aneinandergereiht werden, dass sie der Länge nach von den Kufen unterfahren werden können. Diese Vorkommissionierung kann erfolgen, solange das zu beladene Fahrzeug noch unterwegs ist und die Aneinanderreihung stellt auch keinen Zeitverlust dar, weil die Waren ja ohnehin kommissioniert werden müssen.

Ein besonderer Vorteil der Erfindung liegt darin, dass das Antriebsportal dazu eingerichtet ist, durch eine synchrone Bewegung der mittels der Anschlüsse gekoppelten Kufen in einem Arbeitsgang sämtliche von den Kufen unterfahrenen Paletten in die Warenpalettenaufnahme hinein zu fördern, und nach einem Umsetzen des Antriebsportals auf die gegenüberliegende Seite der aufgenommenen Kufen und einem Anschluss an die gegenüberliegenden endseitigen Anschlüsse die Kufen in einem Arbeitsgang synchron auf die Ladefläche eines anwesenden Fahrzeugs zu verladen.

Vorzugsweise wird die Umsetzbewegung des Antriebsportals erreicht, indem das Antriebsportal in der Höhe über die aufgenommenen Kufen und darauf befindliche Warenpaletten hinweg zur gegenüberliegenden Seite verfährt.

Dies ermöglicht eine einfache Konstruktion und robuste Auslegung der Kufen, die keinen eigenen Antrieb benötigen. Ferner kann für beide Bewegungsarten, die Einzug- und die Ausschubbewegung der gleiche Antrieb verwendet werden, und es muss keinerlei Infrastruktur im zu beladenen Fahrzeug vorgesehen sein, da das Antriebsportal beim Einschieben der Kufen auf die Ladefläche bereits auf der in Richtung der Längsachse "rückwärtigen" Seite - bezogen auf die Ladefläche des Fahrzeugs - angeordnet ist und die eingeladenen Waren somit ein Entfernen des Antriebs nicht behindern.

Die Erfindung wird vorteilhaft weitergebildet, indem das Antriebsportal für jede Kufe ein mit den kufenseitigen Anschlüssen korrespondierenden portalseitigen Anschluss aufweist. Im angeschlossenen Zustand erfolgt mittels des Antriebsportals eine Kraftübertragung auf die Kufen und somit eine Bewegung der Kufen in Längsrichtung. Vorzugsweise weisen die Kufenunterseiten jeweils eine Anzahl von Rollen, insbesondere eine Mehrzahl, auf, die zwischen einer eingezogenen lastfreien Stellung und einer ausgefahrenen Lastaufnahmestellung hin- und herbewegbar sind. Mit ausreichender Antriebsleistung ist es gegebenenfalls auch vorstellbar, die Kufen auf Gleitflächen zu bewegen. Das Vorsehen von Rollen an der Unterseite der Kufen wird jedoch aus Gründen der Geräusch- und Energieeffizienz und der Verschleißarmut als vorteilhaft angesehen.

In einer bevorzugten Ausführungsform weist jeweils der portalseitige Anschluss einen Aktuator zum Bewegen der Rollen zwischen ihrer lastfreien Stellung und ihrer Lastaufnahmestellung auf. Das Antriebsportal weist mit anderen Worten für jede Kufe einen Aktuator auf, der dazu eingerichtet ist, die Kufen in vertikaler Richtung zu bewegen, wenn das Antriebsportal mit den Kufen verbunden ist. In dieser Ausgestaltung wird als nicht nur der Verfahrbetrieb der Kufen in Richtung der Längsachse, sondern auch die Höhenverstellung der Kufen zum Erfassen und Anheben der unterfahrenen Warenpaletten von dem Antriebsportal gewährleistet. Dies stellt eine weitere Vereinfachung des konstruktiven Aufbaus der Kufen dar. Die Kufen sind gemäß dieser Ausgestaltung in nicht angeschlossenem Zustand des Antriebsportals vollständig von dem Antriebsportal und der Übergabestation separiert, und können einzeln ausgetauscht und gewartet werden, ohne dass dafür steuerungstechnische oder sonstige Verkabelungsarbeiten notwendig sind.

In einer weiteren bevorzugten Ausgestaltung weist jede Kufe ein in vertikaler Richtung verstellbares Fahrwerk auf, an dem die Rollen drehbar gelagert sind. Insbesondere steht in dieser Ausführungsform der Aktuator mit dem Fahrwerk in Wirkverbindung, wenn das Antriebsportal mit den Kufen verbunden ist. Das Fahrwerk ist erfindungsgemäß dazu eingerichtet, eine, vorzugsweise horizontale, Translationsbewegung des Aktuators in eine vertikale Bewegung der Rollen in die lastfreie Stellung oder in die ausgefahrene Lastaufnahmestellung umzusetzen.

In einer bevorzugten Variante weist das Fahrwerk einen Koppeltrieb mit mehreren synchron bewegbaren Schwingen auf, an denen die Rollen angeordnet sind. Die Koppelschwingen sind vorzugsweise mittels mindestens einer Koppelstange miteinander synchronisiert, welche durch den Aktuator ausgelenkt wird, wenn das Antriebsportal mit den Kufen verbunden ist. Durch die Verwendung von Koppelstange(n) und Koppelschwingen lässt sich eine Kraftübertragung mit hohem Übersetzungsverhältnis und wenig Bewegungsspiel zwischen den synchronisierten Koppelschwingen bei gleichzeitig geringem Bauraum realisieren.

In einer bevorzugten Ausführungsform ist der Aktuator dazu eingerichtet, in gekoppeltem Zustand des Antriebsportals mit den Kufen die Rollen, vorzugsweise mittels Bewegen der mindestens einen Koppelstange, synchron in die lastfreie Stellung oder Lastaufnahmestellung zu bewegen.

In einer weiteren bevorzugten Ausführungsform weisen die Anschlüsse miteinander korrespondierende Positionierelemente auf, welche durch Bewegung der Antriebseinheit in vertikaler Richtung miteinander in Eingriff bringbar sind, und im Eingriff die Position der Kufen relativ zu dem Antriebsportal zumindest in Richtung der Längsachse festlegen. Vorzugsweise weisen hierbei der portalseitige Anschluss und der kufenseitige Anschluss korrespondierende Formschlusselemente auf, die das Antriebsportal und die Kufen im gekoppelten Zustand zumindest in horizontaler Ebene relativ zueinander fixieren. Dies kann beispielsweise durch Langlöcher und korrespondierend ausgeformte längliche Vorsprünge umgesetzt sein, die neben einer Positionierung in Längs- und Querrichtung auch eine parallele Ausrichtung der Kufen zumindest unterstützen können.

Der Aktuator der Übergabestation weist in bevorzugten Ausführungsformen beispielsweise einen pneumatischen, hydraulischen oder elektromagnetischen Kolben, oder eine Kombination aus den vorstehenden Elementen auf.

Die Erfindung wird in einem weiteren Aspekt dadurch geprägt, dass die Kufen in Richtung der Längsachse jeweils aus zwei oder mehr Segmenten gebildet sind, wobei vorzugsweise jedes der Segmente eine oder mehrere zwischen der lastfreien Stellung und der Lastaufnahmestellung hin- und her bewegbare Rollen aufweist. Weiter vorzugsweise besteht gemäß diesem Aspekt auch die Koppelstange aus mehreren in Richtung der Längsachse reversibel miteinander koppelbare Koppelstangenelementen, wobei jedes Kufensegment wenigstens ein Koppelstangensegment aufweist, und wobei die Rollen jedes Segments mittels des Ihnen zugeordneten Koppelstangensegments mit den Rollen des oder der übrigen Segmente in der Kufe synchronisiert sind. Hierdurch lässt sich modulartig die Länge der Kufen variieren und an die jeweiligen Platzverhältnisse am Logistiksystem, oder ggf. auch an die zur Verfügung stehende Länge der Ladefläche des Fahrzeugs anpassen, sofern die Warenpalettenaufnahme in Längsrichtung zur Aufnahme der Kufen ausreichend Platzverhältnisse vorsieht.

In einer besonders bevorzugten Ausgestaltung der Erfindung weist die Übergabestation sechs Kufen parallel nebeneinander auf, wobei jede Kufe vorzugsweise eine Länge von 8 Metern oder mehr aufweist. Vorzugsweise bewegt sich die Länge in einem Bereich von etwa 8 Metern bis etwa 16 Metern. Bei einer solchen Konfiguration lassen sich beispielsweise besonders bevorzugt sogenannte Europaletten nach EN 13698-1 verladen. Mit den sechs nebeneinander angeordneten Kufen lassen sich simultan drei Paletten nebeneinander unterfahren und die gemeinsam eine Breite von etwa 2,40 Meter einnehmen, wodurch die Ladefläche eines konventionellen für den europäischen Markt vorgesehenen Lastkraftfahrzeugs gut ausgeschöpft wird. Je nach Länge des Fahrzeugs lassen sich mit dieser bevorzugten Ausgestaltung etwa 36 Warenpaletten in einem Arbeitsgang auf das Fahrzeug bewegen. Sowohl der manuelle Arbeitsaufwand als auch der für den Verladevorgang benötigte Zeitaufwand sinkt hierdurch enorm, nämlich auf einen Bereich von 5 Minuten bis 10 Minuten. Zum Vergleich: Eine manuelle Beladung eines Lastkraftwagens mit 36 Paletten würde ca. 50 - 60 Minuten beanspruchen

In einer bevorzugten Ausführungsform der Erfindung ist die Warenpalettenaufnahme der Übergabestation in vertikaler Richtung verfahrbar ausgebildet, und/oder quer zu der Längsachse bewegbar, beispielsweise mittels motorischer Antriebe und Steuerungsmitteln, wie sie in EP 2602216 beschrieben sind. Alternativ oder zusätzlich ist die Warenpalettenaufnahme vorzugsweise um eine vertikale Achse verschwenkbar, vorzugsweise mittels entsprechender Antriebe, um eine ideale Ausrichtung der Warenpalettenaufnahme auf die kommissionierten aneinandergereihten Warenpaletten einerseits und das zum Aufnehmen der Warenpaletten bereitgestellte Fahrzeug andererseits zu ermöglichen.

In weiter bevorzugten Ausgestaltungen weisen die Kufen in ihrem ersten und/oder zweiten Endabschnitt einen Näherungssensor auf, der vorzugsweise dazu eingerichtet ist, die Annäherung der Kufen an ein Hindernis, wie beispielsweise die Ladeflächenwand eines Fahrzeugs oder Anhängers zu erfassen. Hierdurch wird verhindert, dass mit den Kufen von dem Antriebsportal das Fahrzeug versehentlich aus seiner Parkposition weggeschoben wird, oder Schäden an der Ladeflächenwand verursacht werden.

Die Übergabestation weist in einer bevorzugten Ausführungsform eine elektronische Steuerung und mit ihr signalleitend verbundene Sensoren, insbesondere Abstandssensoren, zum Ausrichten der Warenpalettenaufnahme auf. Die Abstandsensoren sind beispielsweise eingerichtet, den Abstand zu Referenzgeometrien zu erkennen, die am Fahrzeug vorgesehen sind. Hierdurch erfolgt eine Ausrichtung auf Mitte und Höhe der Ladefläche des Fahrzeugs auf besonders zuverlässige Art und Weise.

Während die Erfindung vorstehend unter Bezugnahme auf die Übergabestation beschrieben worden ist, betrifft die Erfindung wie eingangs erwähnt in einem weiteren Aspekt auch ein Logistiksystem zum Schnellverladen von Warenpaletten zwischen einem Lager und einer Ladefläche eines Fahrzeugs. Die Erfindung löst bei dem Logistiksystem die eingangs bezeichnete Aufgabe, indem das Logistiksystem einen Kommissionierplatz aufweist, welcher zur Aufnahme und Bereitstellung einer Mehrzahl in einer Längsrichtung aneinandergereihter Warenpaletten eingerichtet ist, einen Stellplatz für die Ladefläche des Fahrzeugs, und eine Übergabestation aufweist, wobei die Übergabestation nach einer der vorstehend beschriebenen bevorzugten Ausführungsform ausgebildet ist. Hinsichtlich der Vorteile und besonderen Ausgestaltungen des erfindungsgemäßen Logistiksystems wird auf die vorstehenden Ausführungen zur erfindungsgemäßen Übergabestation, die Teil des Logistiksystems ist, verwiesen.

Die Übergabestation des Logistiksystems weist vorzugsweise eine elektronische Steuereinheit auf, die dazu eingerichtet ist, die Warenpalettenaufnahme auf eine Mehrzahl aneinandergereihter Warenpaletten auszurichten und/oder das Antriebsportal mit dem ersten Endabschnitt der Kufen zu koppeln und/oder mittels Verfahren des Antriebsportals entlang der Längsachse die Kufen unter die aneinandergereihten Warenpaletten zu bewegen, und/oder mittels eines Aktuators die Rollen der Kufen von der lastfreien Stellung in die Lastaufnahmestellung zu bewegen, sodass die Warenpaletten angehoben werden und/oder die Warenpaletten mittels der Kufen in die Warenpalettenaufnahme zu ziehen und/oder die Warenpalettenaufnahme auf die Ladefläche des Fahrzeugs auszurichten, und/oder das Antriebsportal von dem ersten Endabschnitt zu entkoppeln und mit dem zweiten Endabschnitt der Kufen zu koppeln, und/oder die Warenpaletten von der Warenpalettenaufnahme auf die Ladefläche des Fahrzeugs zu bewegen und/oder die Warenpaletten auf der Ladefläche durch Bewegen der Rollen von der Lastaufnahmestellung in die lastfreie Stellung abzusenken. Je mehr Funktionen die elektrische Steuereinheit in sich vereint, desto größer ist der Grad der erreichbaren Automatisierung und Ausschließung von Fehlerquellen durch Fehlbedienung.

Vorzugsweise sind bei dem erfindungsgemäßen Logistiksystem benachbart zu der Warenpalettenaufnahme neben der Übergabestation in Richtung der Längsachse bodennah Führungsmittel angeordnet. Die Führungsmittel sind vorzugsweise dazu eingerichtet, die parallele Ausrichtung der Kufen zu wahren bzw. zu unterstützen.

In einem weiteren Aspekt betrifft die Erfindung wie eingangs bezeichnet ein Verfahren zum Schnellverladen von Warenpaletten, insbesondere in einem Logistiksystem gemäß einer der vorstehend beschriebenen bevorzugten Ausführungsformen. Das erfindungsgemäße Verfahren löst die eingangs bezeichnete Aufgabe durch die Schritte: Bereitstellen mehrerer entlang einer Längsachse aneinandergereihter Warenpaletten an einem Kommissionierplatz, Koppeln eines Antriebsportals mit einer Mehrzahl von Kufen, Ausfahren der Kufen mittels des Antriebsportals aus einer Warenpalettenaufnahme unter die Warenpaletten, und Erfassen der Warenpaletten mittels der Kufen, und Einfahren der Kufen mitsamt den Warenpaletten in die Warenpalettenaufnahme.

Hinsichtlich der Vorteile und bevorzugten Ausführungsformen des Verfahrens wird auch auf die obigen Ausführungen zum erfindungsgemäßen Logistiksystem und zur erfindungsgemäßen Übergabestation verwiesen.

Das erfindungsgemäße Verfahren wird vorteilhaft weitergebildet durch den Schritt: Bewegen einer Anzahl von Rollen, die unterseitig an den Kufen vorgesehen sind, von einer eingezogenen lastfreien Stellung in eine ausgefahrene Lastaufnahmestellung, nachdem die Kufen unter die Warenpaletten verfahren worden sind, vorzugsweise synchron, besonders bevorzugt mittels eines an dem Antriebsportal vorgesehenen und im gekoppelten Zustand mit der Koppelstange in Wirkverbindung stehenden Aktuators.

Weiter vorzugsweise umfasst das Verfahren einen, mehrere oder sämtliche der Schritte: Ausrichten der Warenpalettenaufnahme auf die Warenpaletten, vor dem Schritt des Ausfahrens der Kufen, Ausrichten der Warenpalettenaufnahme mitsamt den Warenpaletten auf die Ladefläche eines Fahrzeugs, nach dem Schritt des Einfahrens der Kufen, Ausfahren der Kufen mitsamt den Warenpaletten aus der Warenpalettenaufnahme auf die Ladefläche eines Fahrzeuge oder Anhängers, nach dem Schritt des Ausrichtens auf die Ladefläche, Erfassen der Annäherung der Kufen an eine Wand der Ladefläche, und Stoppen des Ausfahrens der Kufen, sobald eine vorbestimmte Distanz zwischen den Kufen und der Wand der Ladefläche unterschritten wird.

Die Erfindung wird nachfolgend unter Bezugnahme auf die beigefügten Figuren anhand eines bevorzugten Ausführungsbeispiels näher beschrieben. Hierbei zeigen:
- Figur 1: eine schematische räumliche Darstellung eines Logistiksystems mit Übergabestation gemäß einem ersten Ausführungsbeispiel,
- Figur 2: eine alternative Ansicht des Logistiksystems gemäß Figur 1,
- Figur 3: eine Detailansicht gemäß Figur 2 in einem anderen Betriebszustand,
- Figur 4: eine weitere alternative räumliche Ansicht des Logistiksystems gemäß den Figuren 1 bis 3 in einem weiteren Betriebszustand,
- Figur 5: eine weitere räumliche schematische Darstellung gemäß Figur 4 in noch einem weiteren Betriebszustand,
- Figuren 6a-c: verschiedene Seitenansichten eines Kufensegments gemäß einem ersten Ausführungsbeispiel für die Übergabestation gemäß den Figuren 1 bis 5,
- Figuren 6d+e: verschiedene Querschnittsansichten des Kufensegments gemäß den Figuren 6a-c in unterschiedlichen Betriebszuständen,
- Figur 7: eine räumliche schematische Detailansicht des Antriebsportals der Übergabestation gemäß den Figuren 1 bis 5,
- Figur 8: eine Querschnittsansicht zu Figur 7,
- Figuren 9a-b: verschiedene Seitenansichten eines Kufensegments gemäß einem zweiten Ausführungsbeispiel für die Übergabestation gemäß den Figuren 1 bis 5,
- Figuren 9c, d: verschiedene Querschnittsansichten des Kufensegments gemäß Figuren 9a, b in unterschiedlichen Betriebszuständen,
- Figur 10: eine schematische räumliche Ansicht des Aktuatormechanismus' für die Kufen gemäß dem zweiten Ausführungsbeispiel,
- Figur 11: eine schematische Seitenansicht eines Kufensegments gemäß dem zweiten Ausführungsbeispiel im Eingriff mit dem Aktuatormechanismus gemäß Figur 10, und
- Figur 12: eine schematische räumliche Ansicht einer Kufe gemäß dem ersten oder zweiten Ausführungsbeispiel mit einem zusätzlichen Zentriermittel.

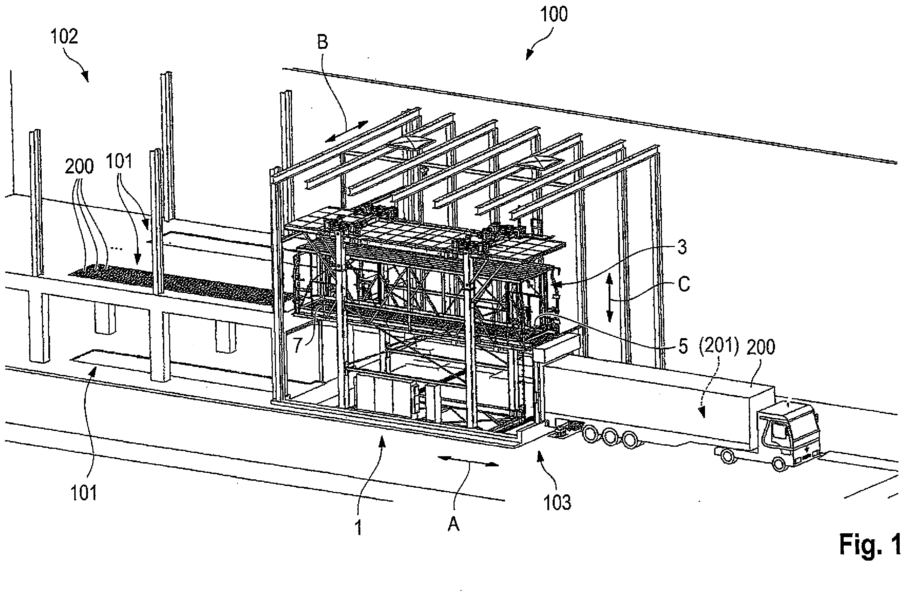

In Figur 1 ist ein Logistiksystem 100 abgebildet. Das Logistiksystem 100 weist eine Mehrzahl von Kommisionierplätzen 101 auf, die beispielsweise in einer Lagerhalle 102 vorgesehen sind. Benachbart zu den Kommissionierplätzen 101 ist eine Übergabestation 1 gemäß einem bevorzugten Ausführungsbeispiel der Erfindung angeordnet. Auf einer bezüglich den Kommissionierplätzen 101 gegenüberliegenden Seite der Übergabestation 1 sind eine oder mehrere Andockstationen 103 vorgesehen, die zur Aufnahme von Fahrzeugen eingerichtet sind. Ein Lastkraftwagen 200 ist mit einer (verdeckten) Ladefläche 201 an die Andockstation 103 gemäß Figur 1 herangefahren und wartet auf eine Beladung durch die Übergabestation 1.

Die Übergabestation 1 ist mittels entsprechender motorischer Antriebe quer in Richtung des Pfeils B verfahrbar, sowie vertikal in Richtung des Pfeils C.

Die Übergabestation 1 weist eine Warenpalettenaufnahme 3 auf. Die Warenpalettenaufnahme 3 ist innerhalb der Übergabestation in Richtung des Pfeils C vertikal verfahrbar. In der Warenpalettenaufnahme ist ferner ein Antriebsportal 5 angeordnet, welches in Richtung einer Längsache A, angedeutet durch den ebenso bezeichneten Pfeil, innerhalb dessen die Warenpalettenaufnahme 3 verfahrbar ist, sowie in Richtung des Pfeils C vertikal innerhalb der Warenpalettenaufnahme 3.

Die Warenpalettenaufnahme 3 weist eine Mehrzahl von parallel ausgerichteten Kufen 7 auf, die mittels des Antriebsportals 5 angreifbar und in Richtung des Pfeils A verfahrbar sind.

In einem der Kommissionierplätze 101 ist eine Vielzahl von aneinander aufgereihten Warenpaletten 200 angeordnet. Die Kufen 7 der Warenpalettenaufnahme 3 sind derart beabstandet, dass sie die aneinandergereihten Paletten 200 unterfahren können.

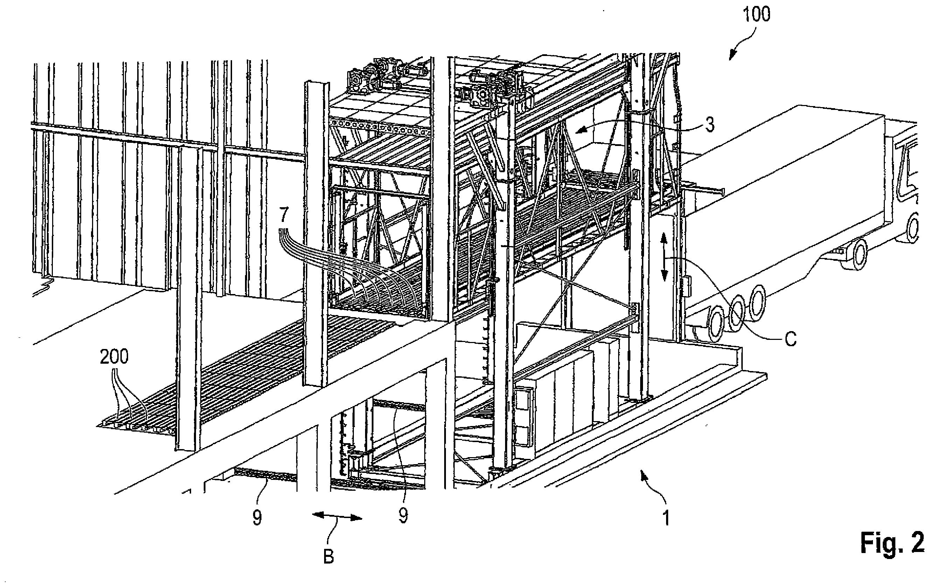

Die Arbeitsweise des erfindungsgemäßen Logistiksystems wird nachfolgend unter Bezugnahme auf die Figuren 2 bis 5 näher beschrieben.

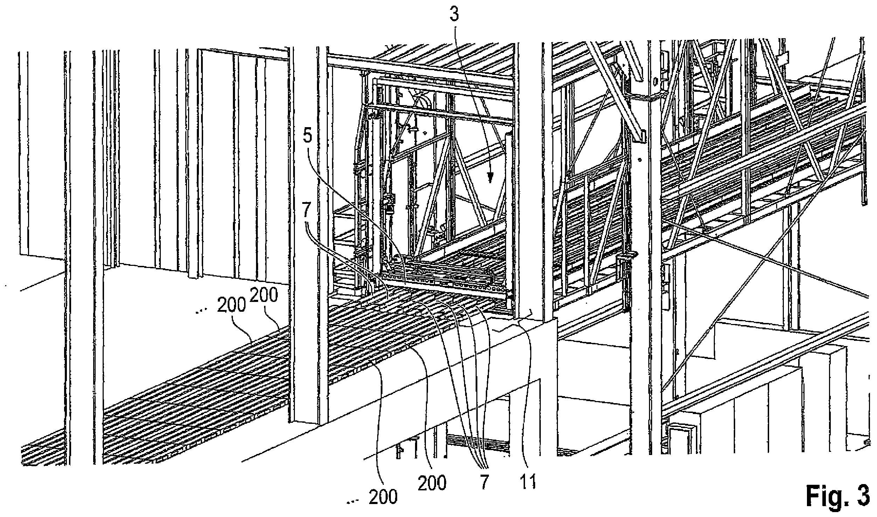

Zum Durchführen eines Schnellladevorgangs wird zunächst die Warenpalettenaufnahme 3 auf eine Höhe verfahren, in der die Kufen 7 auf einer Höhe mit den Paletten 200 angeordnet sind, um diese unterfahren zu können. Hierzu wird die Übergabestation 1 vorzugsweise auf Schienen 9 in Richtung des Pfeils B quer verfahren, und die Warenpalettenaufnahme 3 in Richtung des Pfeils C in der richtigen Höhe eingestellt. Nach erfolgter Positionierung, und gegebenenfalls korrekter winkliger Ausrichtung, werden die Kufen 7 mittels des Antriebsportals 5, welches in einem ersten Endabschnitt 11 der Kufen 7 an diese angeschlossen ist, unter die Paletten 200 geschoben, vgl. Figur 3.

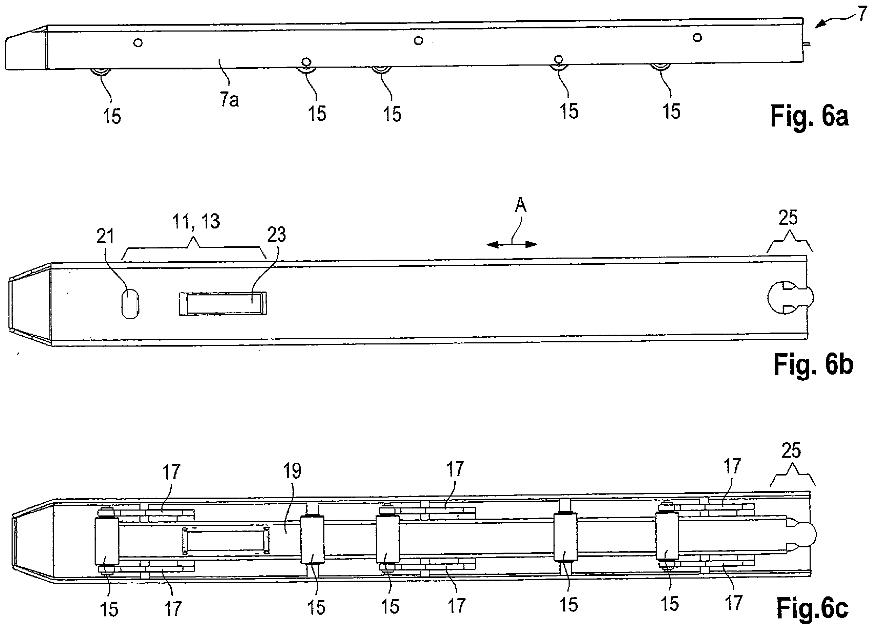

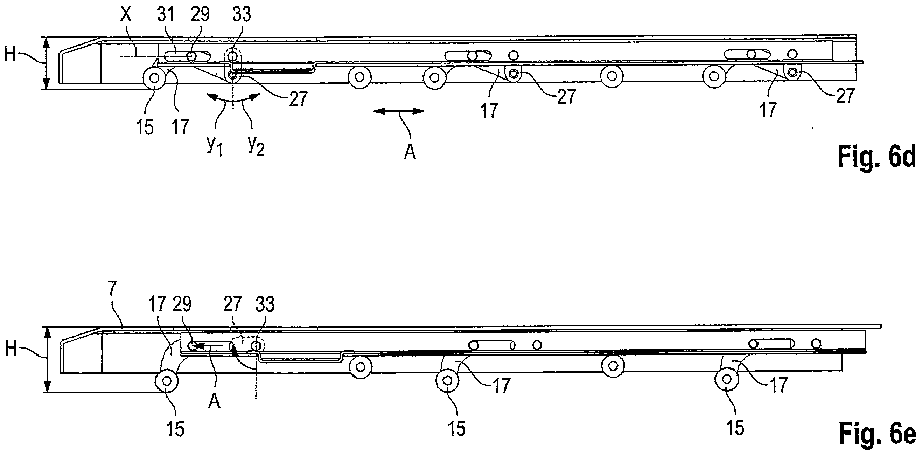

In einem nächsten Schritt werden die Kufen 7 angehoben, nachdem sie sämtliche Paletten 200 unterfahren haben, und das Antriebsportal 5 zieht die Kufen vollständig in die Aufnahme 3 hinein. Zum Hubmechanismus der Kufen 7 wird auf die Figuren 6 bis 8 verwiesen.

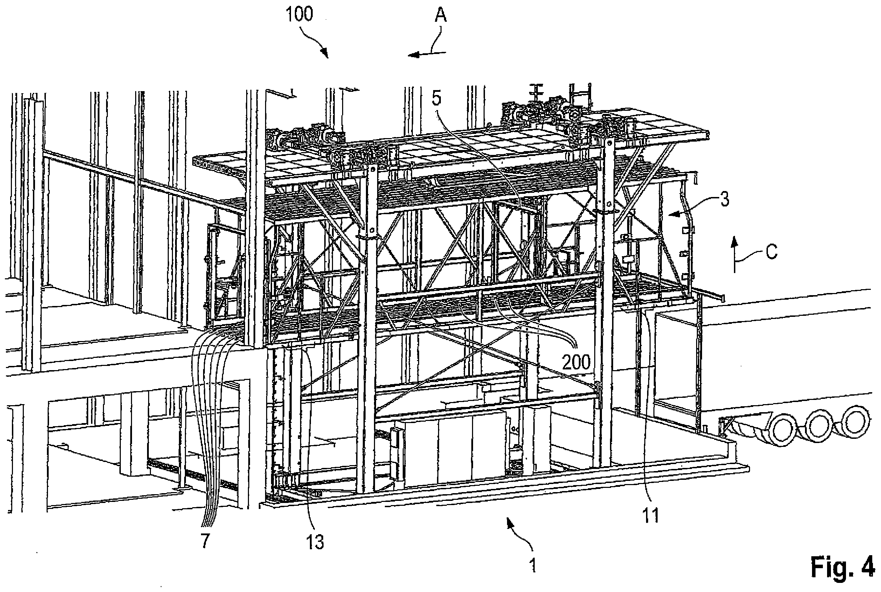

Nach erfolgtem Beladevorgang, der in Figur 4 dargestellt ist, wird in der Warenpalettenaufnahme 3 das Antriebsportal 5 von dem Endbereich 11 und den dort vorgesehenen korrespondierenden Koppelmitteln entfernt, in Richtung des Pfeils C nach oben verfahren und anschließend in Richtung der Längsachse, angedeutet durch Pfeil A in Richtung eines zweiten Endabschnitts 13 verfahren, um dort an entsprechend vorgesehene Koppelmittel der Kufen wieder angeschlossen zu werden.

Das Antriebsportal 5 fährt hierbei in Richtung des Pfeils A über die Paletten 200 hinweg, die in der Aufnahme 3 auf den Kufen 7 angeordnet sind.

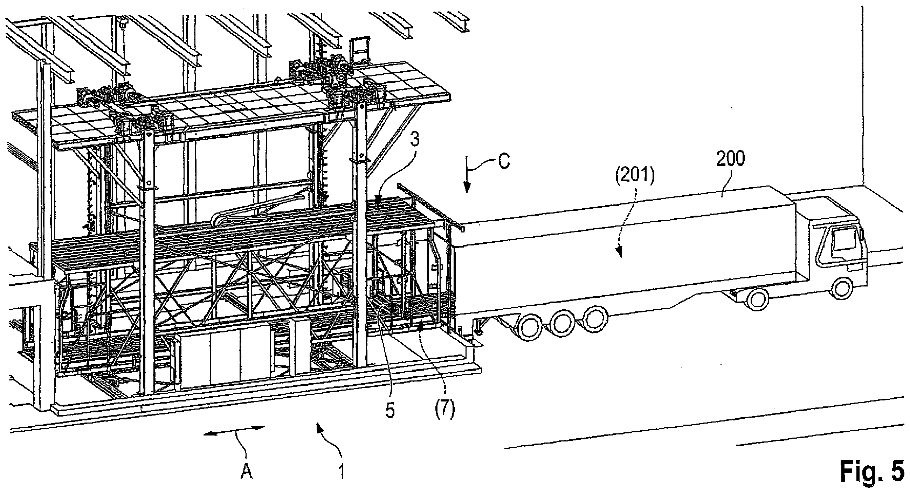

Nachdem das Antriebsportal 5 auf der gegenüberliegenden Seite angekommen ist, und im zweiten Endbereich 13 der Kufen 7 wieder an diese angeschlossen wurde, kann der in Figur 5 skizzierte Verladevorgang fortgesetzt werden. Die Warenpalettenaufnahme 3 wird soweit in Richtung des Pfeils C abgesenkt, dass die Kufen 7 auf Höhe der Ladefläche 201 angeordnet sind, so dass das Antriebsportal 5 sodann die Warenpaletten 200 in Richtung des Pfeils A in Richtung der Längsachse in das Fahrzeug 200 hinein befördern kann.

Nach vollständigem Einfahren sämtlicher Paletten in das Fahrzeug 200 können die Kufen 7 (siehe Figuren 1 bis 4) wieder abgesenkt werden und zurück in die Warenpalettenaufnahme 3 mittels des Antriebsportals 5 eingezogen werden. Es verbleibt kein Vorrichtungselement in dem Fahrzeug 200, welches nun nach erfolgtem Beladungsvorgang seine Fahrt aufnehmen kann. Die Übergabestation 1 kann zu einem weiteren Kommissionierplatz 101 verfahren werden, um dort eine Warenpalettenladung für ein weiteres Fahrzeug aufzunehmen.

In den Figuren 6a-e sind funktionsrelevante Teile der Kufen 7 gemäß einem ersten Ausführungsbeispiel dargestellt. Es ist jeweils ein Kufenendsegment 7a zu sehen. In den Kufenendsegmenten 7a sind die gegenüberliegenden Endbereiche 11, 13 vorgesehen. Der Einfachheit halber wird im Folgenden nur Bezug auf den ersten Endbereich 11 genommen, der aber vorzugsweise in gleicher Weise aufgebaut ist wieder gegenüberliegende Endbereich 13.

Die Funktionsweise der Kufen wird anhand des Kufenendsegments 7a beschrieben. Die Ausführungen gelten aber in gleicher Weise auch für Kufen, die nicht segmentartig sondern einstückig ausgebildet sind.

Die in den Figuren 6a-e gezeigten Kufe 7 weist eine Mehrzahl unterseitig angeordneter Rollen 15 auf.

Die Rollen 15 sind jeweils drehbar an Koppelschwingen 17 gelagert. Die Koppelschwingen 17 sind ihrerseits mit einer Koppelstange 19 derart gelenkig verbunden, dass eine Translationsbewegung der Koppelstange 19 in Richtung der Längsachse A eine Schwenkbewegung der Koppelschwingen 17 und somit eine vertikale Bewegung, gegebenenfalls bogenförmig, der Rollen 15 bewirkt, so dass die Kufen 7 in ihrer Höhe verstellt werden.

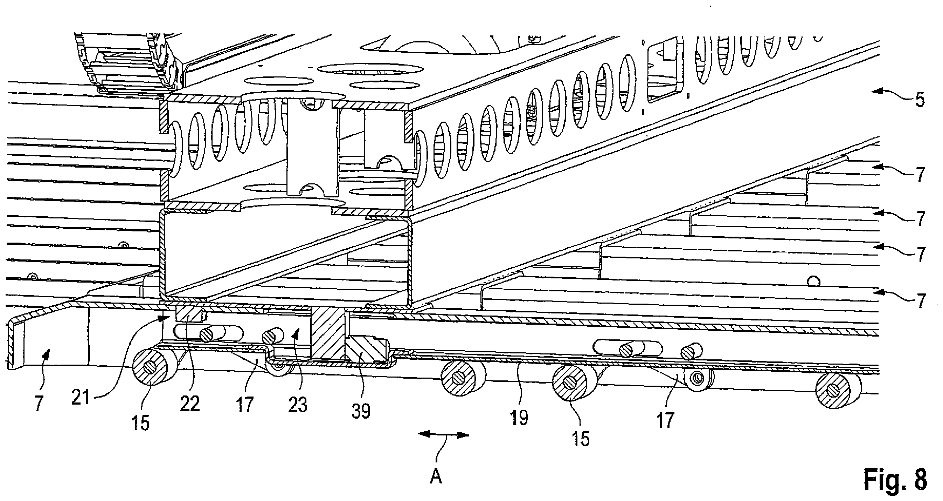

Wie insbesondere aus Figur 6b ersichtlich ist, weist der jeweilige Endbereich 11, 13 der Kufen 7 Koppelmittel in Form einer Ausnehmung 21 zur Aufnahme korrespondierender Formschlussmittel des Antriebsportals auf. Mittels dieser korrespondierenden Formschlussmittel und den Ausnehmungen 21 wird die Position in Richtung der Längsachse A der Kufen 7 untereinander eindeutig definiert. Ferner ist in den Endbereichen 11, 13 eine weitere Ausnehmung 23 ausgebildet, in die ein Aktuator eingreift, wenn das Antriebsportal 5 an die Kufen 7 angeschlossen ist (siehe Figur 8 diesbezüglich). Die Kufensegmente 7a weisen an einem dem Endbereich 11, 13 gegenüberliegenden Ende einen Koppelabschnitt 25 auf, an dem die Kufensegmente 7a selbst wie auch die segmentartige Koppelstange 19 mit benachbarten Kufensegmenten (nicht dargestellt) gekoppelt werden können. Alternativ hierzu sind die Kufen 7 wie vorstehend beschrieben einstückig ausgebildet und erstrecken sich von einem Endbereich 11 bis zum gegenüberliegend angeordneten Endbereich 13 (nicht dargestellt).

In den Figuren 6d,e ist das eingefahrene und ausgefahrene Höhenprofil H der Kufen 7 verdeutlicht. Die Koppelschwingen 17 sind als erste Koppelschwinge mit einer jeweiligen weiteren Koppelschwinge 27 verbunden und gleichzeitig mittels eines Vorsprungs 29 in Richtung der Längsachse A linear beweglich in Langlöchern 31 geführt. Eine Bewegung der insbesondere in Figur 6c gut zu erkennenden Koppelstange 19 führt zum einen zu einer Translationsbewegung der Koppelschwingen 17 in Richtung der gestrichelten Linie X. Die Kopplung mit den zweiten Koppelschwingen 27 bewirkt aber eine Schwenkbewegung der zweiten Koppelschwingen 27 um einen Rotationspunkt 33, so dass auch die erste Koppelschwinge 17 in eine Rotation versetzt wird. Hierdurch werden die Rollen 15 aus dem Chassis der Kufen 7 herausbewegt, und die Höhe H der Kufen über dem Boden wird erhöht, was zu dem Zustand gemäß Figur 6e führt. Eine Horizontalbewegung der Koppelstange 19 (Figur 6c) sowohl in die eine als auch in die andere Richtung sorgt also für eine Vergrößerung der Standhöhe H ausgehend von Figur 6d. Dies ermöglicht einen bidirektionalen Betrieb.

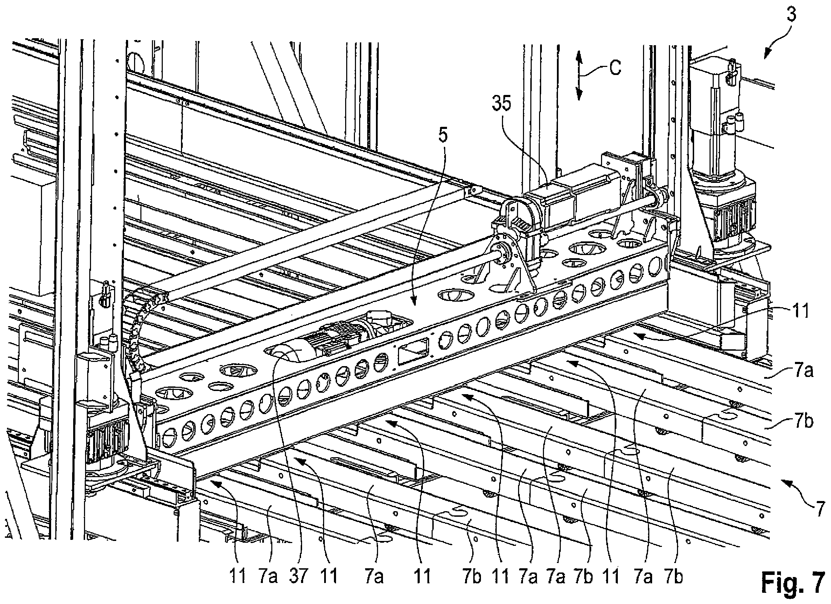

In Figur 7 ist die angeschlossene Position des Antriebsportals 5 in einem ersten Endbereich 11 der Kufen 7 der Warenpalettenaufnahme 3 dargestellt. Die segmentartig aufgebauten Kufen 7 weisen benachbart zu dem Kufenendsegment 7a jeweils ein angeschlossenes weiteres Kufensegment 7b auf. Das Antriebsportal 5 verfügt über einen ersten Antriebsmotor 35 für die vertikale Verfahrbewegung in Richtung des Pfeils C sowie einen zweiten Antriebsmotor 37 zum Betätigen der Aktuatoren, auf die im Folgenden unter Bezugnahme auf Figur 8 eingegangen wird.

In Figur 8 ist das Antriebsportal 5 in angeschlossenem Zustand teilweise im Querschnitt nochmals dargestellt. Ein Positioniervorsprung 22 befindet sich in formschlüssigem Eingriff mit der Ausnehmung 21.

Ein Aktuator 39 ist innerhalb der zweiten Ausnehmung 23 angeordnet. Durch Betätigen des Aktuator 39 wird die Koppelstange 19 in Richtung des Pfeils A ausgelenkt, wodurch es zu einer Schwenkbewegung der Koppelschwingen 17 gemäß den Figuren 6d,e kommt. Die Rollen 15 werden ausgefahren.

Wie sich aus dem Vorstehenden anschaulich ergibt, ist mit einfach beherrschbaren und robusten Antriebsmitteln ein reversibel lösbarer Anschluss des Antriebsportals an die Kufen 7 bereitgestellt.

Insbesondere durch Zuhilfenahme der Positioniermittel 21, 22 ist das Antriebsportal in der Lage, sämtliche Kufen 7 simultan zu koppeln und sich von diesen abzukoppeln, was den Verladevorgang der mit den Kufen 7 transportierten Warenpaletten leicht beherrschbar macht und ein zeiteffizientes Arbeiten des Antriebsportals 5 in der Warenpalettenaufnahme 3 (Figur 7) ermöglicht.

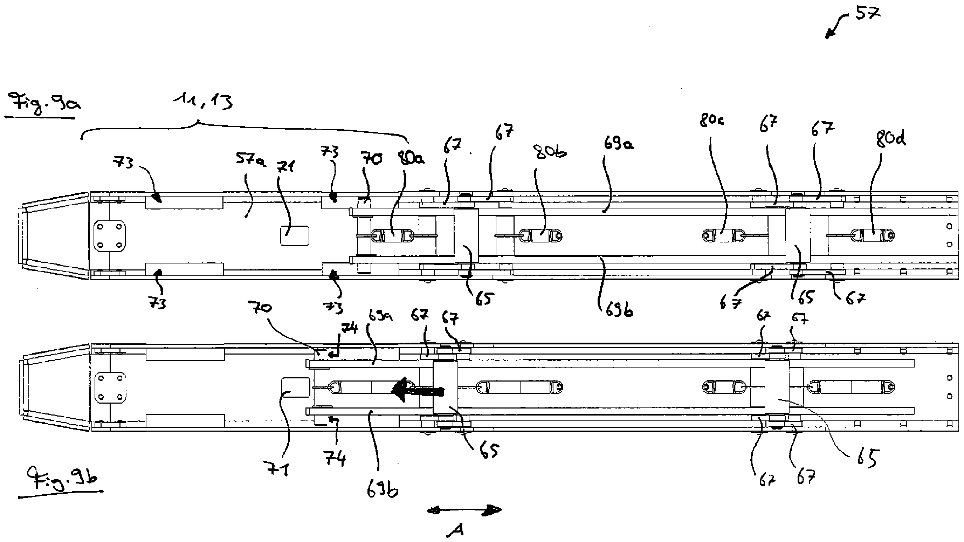

Während die Figuren 6a bis e eine erfindungsgemäße Kufe 7 mit einem Koppeltrieb gemäß einem ersten Ausführungsbeispiel gezeigt haben, ist in den Figuren 9a bis d ein alternativer Koppeltrieb illustriert. In den Figuren 9a bis d ist jeweils ein Endsegment 57a einer erfindungsgemäßen Kufe 57 abgebildet, das den Endabschnitt 11, 13 einer Kufe in dem erfindungsgemäßen Logistiksystem bzw. an der erfindungsgemäßen Übergabestation ausbildet. An der Unterseite der Kufe 57 sind mehrere Rollen 65 angeordnet. Die Rollen 65 sind jeweils drehbar an Koppelschwingen 67 gelagert. Die Koppelschwingen 67 sind ihrerseits jeweils mit einer ersten und zweiten Koppelstange 69a, b derart gelenkig verbunden, dass eine Translationsbewegung der Koppelstange 69a, b in Richtung der Längsachse A eine Schwenkbewegung der Koppelschwingen 67 um eine horizontale Ache, und somit eine vertikale Bewegung, gegebenenfalls kreisbogenförmig, der Rollen 65 bewirkt, so dass die Kufen 57 in ihrer Höhe verstellt werden.

Die erste und die zweite Koppelstange 69a, b sind mittels eines Zugzapfens 70 im Wesentlichen starr miteinander gekoppelt.

Beidseitig der Rollen 65 sind Zugfedern 80a, b vorgesehen, die die Rollen 65 in Abwesenheit einer auf die Koppelstange 69a, b wirkenden Antriebskraft in einer neutralen, lastbefreiten Position und somit im eingefahrenen Zustand halten.

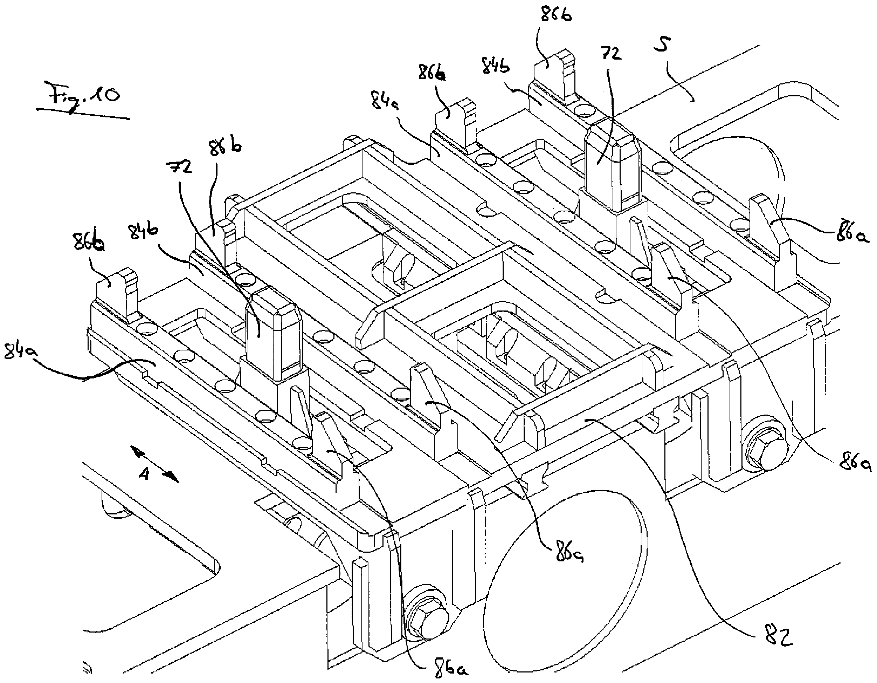

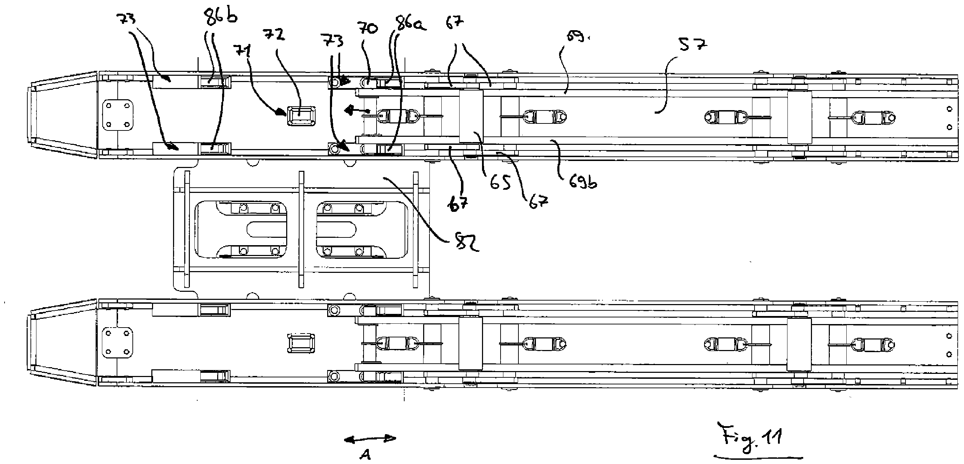

An dem jeweiligen Endbereich 11, 13 der Kufen 57 sind Koppelmittel in Form einer Ausnehmung 71 zur Aufnahme korrespondierender Formschlussmittel bzw. Positioniermittel 72 (Figur 10) des Antriebsportals 5 vorgesehen. Mittels dieser korrespondierenden Formschlussmittel 22 und den Ausnehmungen 21 wird die Position in Richtung der Längsachse A der Kufen 57 untereinander eindeutig definiert bzw. relativ zu dem Antriebsportal 5 festgelegt. Ferner sind in den Endbereichen 11, 13 weitere Ausnehmungen 23 ausgebildet, in die jeweils ein Aktuatormechanismus des Antriebsportals 5 eingreift, wenn das Antriebsportal 5 an die Kufen 57 angeschlossen ist (siehe Figur 11). Die Kufensegmente 57a weisen wie auch die Kufensegmente 7a vorzugsweise entsprechende Koppelabschnitte auf zum Anschluss weiterer Kufensegmente. Die erste und zweite Koppelstange 67 weisen vorzugsweise ebenfalls Koppelmittel, vorzugsweise formschlüssige, zum Anschluss weiterer Koppelstange für weitere Kufensegmente auf, die keine Kufenendsegmente sind.

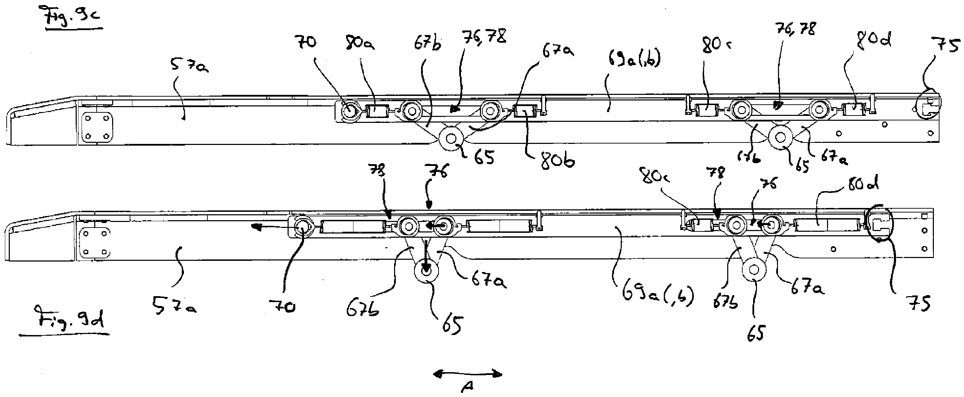

Während in Figuren 9a die Kufe 57 mit den Rollen 65 in einer eingefahrenen Stellung gezeigt ist (siehe Figur 9c), ist der Zapfen 70 in Figur 9b, d in Richtung der Längsachse A nach links ausgelenkt worden, indem der Zapfen mittels hakenförmiger Vorsprünge 86 (Fig. 11) an den Abschnitten 74 erfasst und entsprechend bewegt worden ist. Die Koppelstangen 69a, b sind hierdurch gemeinsam nach links bewegt worden, wodurch eine Schwenkbewegung der Koppelschwingen 67 damit eine Höhen-Verstellbewegung der Rollen 65 erzwungen wird.

Dies wird aus den Figuren 9c, d deutlicher.

Wie sich zunächst aus Figur 9c ergibt, weist die Kufe 57 ein Langloch 76 auf, welches in der gezeigten neutrale Stellung fluchtend zu einem Langloch 78 in der Koppelstange 69a ausgerichtet ist. Für die nicht in der Zeichnungsebene liegende Seite der Kufe 57 und die Koppelstange 69b gilt dasselbe. Der Aufbau ist insoweit spiegelsymmetrisch, wie sich aus den Figuren 9a, b ersehen lässt.

Die Zugfedern 80a, b halten die Rollen 65 in der in Figur 9c gezeigten eingefahrenen Position. Wird nun ausgehend von dem Stadium gemäß Figur 9c die Koppelstange 69a durch Zugbewegung des Zapfens 70 nach links bewegt, bewegt sich das Langloch 78 relativ zu dem Langloch 76 in der Kufe. Während also der in Figur 9c gezeigte linke Lagerpunkt der Koppelschwinge 67b durch das Ende des Langlochs in der Kufe 57 ortsfest bleibt, wandert der gegenüberliegende rechte Lagerpunkt der Koppelschwinge 67a mit dem Ende des Langlochs 78 und der Koppelstange 69a nach links. Der Winkel der beiden Koppelschwingen 67a, b zueinander wird verringert, und die Rolle 65 hierdurch abwärts bewegt, wodurch die Höhe der Kufe verstellt wird. Aufgrund der Koppelstange 69a sind sämtliche Rollen 65 und Koppelschwingen 67 miteinander zwangssynchronisiert und bewegen sich wie vorstehend beschrieben.

Die Koppelstangen 69a, b weisen, in Fig. 9b rechts, Formschlussabschnitte 75 zum Koppeln an benachbarten Koppelstangen eines weiteren (nicht gezeigten) Kufensegments auf. Diesbezüglich wird auf das erste Ausführungsbeispiel verwiesen.

Figur 10 zeigt exemplarisch den Antriebsmechanismus für einen Aktuator 82, welcher in die Kufen 57 eingreift und die Bewegung der Koppelstange 69a, b verursacht. An dem Antriebsportal 5 ist ein als in Richtung der Längsachse A relativ zu dem Antriebsportal verfahrbarer Schlitten als Aktuator 82 ausgebildet. Der Aktuator 82 wird von zwei (im Inneren des Antriebsportals 5 liegenden, nicht dargestellten) elektrisch, pneumatisch oder hydraulisch betriebenen Zylindern bewegt.

An dem Aktuator 82 sind Zugkufen 84a, b befestigt. An den Zugkufen 84a, b sind jeweils hakenförmige Vorsprünge 86a, b ausgebildet. Die hakenförmigen Vorsprünge 86a, b sind so dimensioniert, dass sie sich bei angeschlossenem Antriebsportal 5 an den Kufen 57 durch die Ausnehmungen 73 hindurch in das Innere der Kufe erstrecken. Je nachdem, an welchem Endabschnitt das Antriebsportal 5 an die Kufen 57 angeschlossen wird, gelangen entweder die hakenförmigen Vorsprünge 86a oder die hakenförmigen Vorsprünge 86b in Eingriff mit dem Zapfen 70, der die Koppelstangen 69a, b verbindet. An dem Antriebsportal ist ein Vorsprung 72 als Positioniermittel bzw. Formschlussmittel vorgesehen, der dazu eingerichtet ist, in die Ausnehmung 71 in der Kufe 57 einzugreifen, und das Antriebsportal relativ zu der Kufe 57 eindeutig zu positionieren. In dem vorstehend gezeigten Ausführungsbeispiel sind an dem Aktuator 82 jeweils Eingriffsmittel 86a, b und Positioniermittel 72 für zwei nebeneinanderliegende Kufen 57 vorgesehen, so dass immer zwei Kufen von einem Aktuator 82 bedient werden können.

Die Eingriffssituation des Aktuators 82 in die Kufen 57 ist in Figur 11 in einer Ansicht von unten gezeigt. In den in Figur 11 links angeordneten Ausnehmungen 73 sind die hakenförmigen Vorsprünge 86b angeordnet. In der Ausnehmung 71 ist das Positioniermittel 72 angeordnet. In den in Figur 11 rechts gezeigten Ausnehmungen 73 sind die hakenförmigen Vorsprünge 86a angeordnet und befinden sich in Eingriff mit dem Zapfen 70. Bei einer Betätigung des Aktuators 82 wird dieser relativ zu dem Vorsprung 71 bewegt, wodurch die Haken 86a den Zapfen 7 erfassen und in Richtung der Längsachse A nach links bewegen. Hierdurch vollzieht sich die vorstehend in den Figuren 9a bis d erläuterte und gezeigte Höhen-Verstellbewegung der Rollen 65.

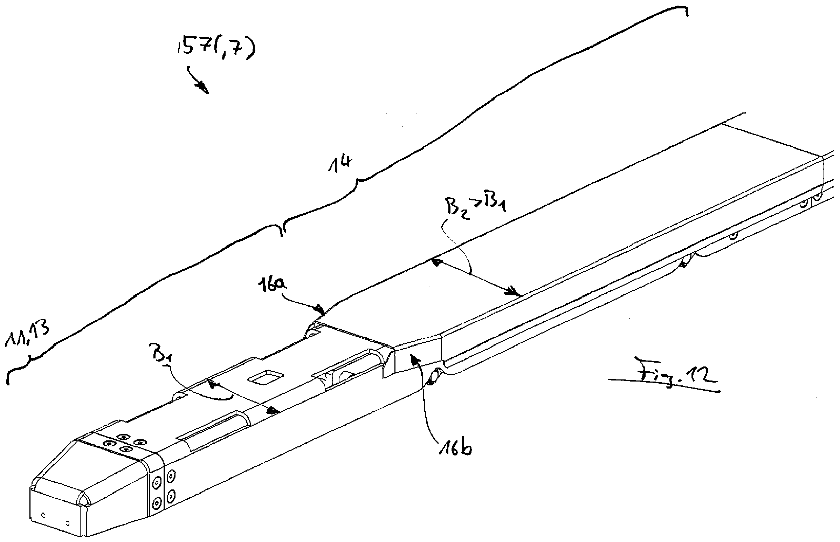

Figur 12 zeigt eine optionale Weiterbildung der erfindungsgemäßen Kufen 7, 57. Benachbart zu dem Endabschnitt 11, 13 weist vorzugsweise das Kufensegment 7, 57a (gezeigt ist bevorzugt die Variante von Kufensegment 57) einen Palettenzentrierbereich 14. In dem Palettenzentrierbereich 14, der vorzugsweise ein Palettenzentrierblech aufweist, ist anhand zweier symmetrisch ausgebildeter, in Richtung des Endbereichs 11, 13 konisch verjüngt zulaufender Flanken 16a, b die Breite der Kufe 7, 57 von einer ersten Breite B₁ im Endbereich 11, 13 auf eine größere Breite B₂ erhöht, die im Vergleich zum Endbereich 11, 13 ein geringeres seitliches Bewegungsspiel zu den Standardmaßen von Paletten aufweist. Die Positioniergenauigkeit der Paletten wird hierdurch auf den Kufen verbessert, was ein besseres und genaueres Verladen der Palettenware mittels der Kufen ermöglicht. Besonders vorteilhaft ist die Beabstandung des Zentrierbereichs 14 vom Endbereich 11, 13 und hierdurch wird der Vorteil der leichten Erfassung auch nicht genau ausgerichteter Paletten durch den vergleichsweise schmalen Endbereich 11, 13 kombiniert mit dem nach dem Erfassen leichter möglichen seitlichen Ausrichten der Paletten durch den Zentrierbereich 14.

## Patentansprüche

1. Übergabestation (1) zum Schnellverladen von Warenpaletten (200) in einem Logistiksystem (100), mit
- einer Warenpalettenaufnahme (3), die zur gleichzeitigen Aufnahme mehrerer aneinander gereihter Warenpaletten (200) entlang einer Längsachse (A) angepasst ist,
- einem Antriebsportal (5), das in der Warenpalettenaufnahme (3) in der Höhe und entlang der Längsachse (A) verfahrbar ist, **gekennzeichnet durch** - eine Mehrzahl von Kufen (7; 57) zum Erfassen der Warenpaletten (200), die entlang der Längsachse (A) innerhalb und zumindest teilweise außerhalb des Aufnahmebereichs verschiebbar sind, wobei
- die Kufen (7, 57) jeweils einen ersten Endabschnitt (11) und einen in Richtung der Längsachse (A) gegenüberliegenden zweiten Endabschnitt (13) aufweisen, und in dem jeweiligen Endabschnitt (11, 13) einen Anschluss zum reversibel lösbaren Koppeln mit dem Antriebsportal (5) aufweisen.

2. Übergabestation (1) nach Anspruch 1,
wobei das Antriebsportal (5) für jede Kufe (7; 57) einen mit den kufenseitigen Anschlüssen korrespondierenden portalseitigen Anschluss aufweist.

3. Übergabestation (1) nach Anspruch 1 oder 2,
wobei die Kufen (7; 57) unterseitig jeweils eine Anzahl von Rollen (15; 65) aufweisen, die zwischen einer eingezogenen lastfreien Stellung und einer ausgefahrenen Lastaufnahmestellung hin- und herbewegbar sind.

4. Übergabestation (1) nach Anspruch 3,
wobei jeweils der portalseitige Anschluss einen Aktuator (39; 82) zum Bewegen der Rollen (15; 65) zwischen ihrer lastfreien Stellung und ihrer Lastaufnahmestellung aufweist.

5. Übergabestation (1) nach einem der vorstehenden Ansprüche,
wobei jede Kufe (7; 57) ein in vertikaler Richtung verstellbares Fahrwerk aufweist, an dem die Rollen (15; 65) drehbar gelagert sind.

6. Übergabestation (1) nach Anspruch 5,
wobei das Fahrwerk einen Koppeltrieb mit mehreren synchron bewegbaren Schwingen (17; 67) aufweist, an denen die Rollen (15; 65) angeordnet sind, wobei vorzugsweise die Koppelschwingen (17; 67), vorzugsweise mittels mindestens einer Koppelstange (19; 69a, b), miteinander synchronisiert sind, welche durch den Aktuator (39; 82) ausgelenkt wird, wenn das Antriebsportal (5) mit den Kufen (7, 57) verbunden ist.

7. Übergabestation (1) nach einem der vorstehenden Ansprüche,
wobei die Anschlüsse miteinander korrespondierende Positionierelemente (21, 22; 71, 72) aufweisen, welche durch Bewegung des Antriebsportals (5) in vertikaler Richtung miteinander in Eingriff bringbar sind und im Eingriff die Position der Kufen (7; 57) relativ zu dem Antriebsportal (5) in Richtung der Längsachse (A) festlegen.

8. Übergabestation (1) nach einem der vorstehenden Ansprüche,
wobei die Kufen (7; 57) in Richtung der Längsachse (A) jeweils aus zwei oder mehr Segmenten (7a, 7b) gebildet sind, wobei vorzugsweise jedes der Segmente (7a, 7b) eine oder mehrere zwischen der lastfreien Stellung und Lastaufnahmestellung hin- und herbewegbare Rollen (15; 65) aufweist.

9. Übergabestation (1) nach einem der Ansprüche 6 bis 8,
wobei die Koppelstange (19; 69a, b) aus mehreren in Richtung der Längsachse (A) reversibel miteinander koppelbaren Koppelstangensegmenten besteht, wobei jedes Kufensegment (7a, 7b) ein Koppelstangensegment aufweist, und die Rollen (15; 65) jedes Segments (7a, 7b) mittels des ihnen zugeordneten Koppelstangensegments mit den Rollen des oder der übrigen Segmente synchronisiert sind.

10. Logistiksystem (100) zum Schnellverladen von Warenpaletten (200) zwischen einem Lager und einer Ladefläche (201) eines Fahrzeugs, mit
- einem Kommissionierplatz (101), welcher zur Aufnahme und Bereitstellung einer Mehrzahl in einer Längsrichtung aneinandergereihter Warenpaletten (200) eingerichtet ist,
- einem Stellplatz für die Ladefläche (201) des Fahrzeugs, und
- einer Übergabestation (1) nach einem der vorstehenden Ansprüche.

11. Logistiksystem (100) nach Anspruch 10,
wobei die Übergabestation (1) eine elektronische Steuereinheit aufweist, die dazu eingerichtet ist,
die Warenpalettenaufnahme (3) auf eine Mehrzahl aneinandergereihter Warenpaletten (200) auszurichten, und/oder
das Antriebsportal (5) mit dem ersten Endabschnitt (11) der Kufen (7; 57) zu koppeln, und/oder
mittels Verfahren des Antriebsportals entlang der Längsachse die Kufen (7; 57) unter die aneinandergereihten Warenpaletten (200) zu bewegen, und/oder mittels eines Aktuators die Rollen (15, 65) der Kufen (7; 57) von der lastfreien Stellung in die Lastaufnahmestellung zu bewegen, so dass die Warenpaletten (200) angehoben werden, und/oder
die Warenpaletten (200) mittels der Kufen (7; 57) in die Warenpalettenaufnahme (3) zu ziehen, und/oder
die Warenpalettenaufnahme (3) auf die Ladefläche (201) des Fahrzeugs auszurichten, und/oder
das Antriebsportal (5) von dem ersten Endabschnitt (11) zu entkoppeln und mit dem zweiten Endabschnitt (13) der Kufen (7; 57) zu koppeln, und/oder die Warenpaletten (200) von der Warenpalettenaufnahme (3) auf die Ladefläche (201) des Fahrzeugs zu bewegen, und/oder
die Warenpaletten (200) auf der Ladefläche (201) durch Bewegen der Rollen (15, 65) von der Lastaufnahmestellung in die lastfreie Stellung abzusenken.

12. Logistiksystem (100) nach Anspruch 10 oder 11,
wobei benachbart zu der Warenpalettenaufnahme (3) in Richtung der Langsachse (A) bodennahe Führungsmittel angeordnet sind.

13. Verfahren zum Schnellverladen von Warenpaletten mittels einer Übergabestation (1) nach einem der Ansprüche 1 bis 9,
umfassend:
- Bereitstellen mehrerer entlang einer Längsachse (A) aneinandergereihter Warenpaletten (200) an einem Kommissionierplatz,
- Koppeln eines Antriebsportals (5) mit einer Mehrzahl von Kufen (7; 57),
- Ausfahren der Kufen (7; 57) mittels des Antriebsportals (5) aus einer Warenpalettenaufnahme (3) unter die Warenpaletten (200), und Erfassen der Warenpaletten (200) mittels der Kufen (7; 57), und
- Einfahren der Kufen (7; 57) mitsamt den Warenpaletten (200) in die Warenpalettenaufnahme (3).

14. Verfahren nach Anspruch 13,
umfassend:
- Bewegen einer Anzahl von Rollen (15, 65), die unterseitig an den Kufen (7; 57) vorgesehen sind, von einer eingezogenen lastfreien Stellung in eine ausgefahrene Lastaufnahmestellung, nachdem die Kufen (7; 57) unter die Warenpaletten verfahren worden sind, vorzugsweise synchron, besonders bevorzugt mittels eines an dem Antriebsportal (5) vorgesehenen und im gekoppelten Zustand mit der Koppelstange (19; 69a, b) in Wirkverbindung stehenden Aktuators (39; 82).

15. Verfahren nach Anspruch 13 oder 14,
umfassend einen, mehrere oder sämtlich der Schritte:
- Ausrichten der Warenpalettenaufnahme (3) auf die Warenpaletten (200), vor dem Schritt des Ausfahrens der Kufen (7; 57),
- Ausrichten der Warenpalettenaufnahme (3) mitsamt den Warenpaletten (200) auf die Ladefläche (201) eines Fahrzeugs, nach dem Schritt des Einfahrens der Kufen (7; 57),
- Ausfahren der Kufen (7; 57) mitsamt den Warenpaletten (200) aus der Warenpalettenaufnahme (3) auf die Ladefläche (201) eines Fahrzeuge oder Anhängers, nach dem Schritt des Ausrichtens auf die Ladefläche (201),
- Erfassen der Annäherung der Kufen (7; 57) an eine Wand der Ladefläche (201), und Stoppen des Ausfahrens der Kufen (7; 57), sobald eine vorbestimmte Distanz zwischen den Kufen (7; 57) und der Wand der Ladefläche (201) unterschritten wird.

## Claims

1. Transfer station (1) for quickly loading goods pallets (200) in a logistics system (100), comprising
- a goods pallet receiving area (3), which is adapted so as to simultaneously receive multiple goods pallets (200) arranged in a row next to one another along a longitudinal axis A,
- a drive portal (5), which can be moved in the goods pallet receiving area (3) in vertical direction and along the longitudinal axis, (A)
**characterised by**
a plurality of runners (7; 57) for taking hold of the goods pallets (200), said runners being movable along the longitudinal axis (A) within and at least partly outside of the receiving area, wherein
- each of the runners (7; 57) has a first end portion (11) and a second end portion (13) opposite the first end portion in the direction of the longitudinal axis (A), and a connection in the respective end portion (11, 13) for coupling to the drive portal (5) in a reversibly releasable manner.

2. Transfer station (1) according to claim 1,
wherein the drive portal (5) for each runner (7; 57) has a portal-side connection point corresponding with the runner-side connection points.

3. Transfer station (1) according to claim 1 or 2,
wherein the runners (7; 57) on the lower side each have a number of rollers (15; 65) which can be moved back and forth between a drawn-in load-free position and a drawn-out load receiving position.

4. Transfer station (1) according to claim 3,
wherein the portal-side connection comprises an actuator (39; 82) for moving the rollers (15; 65) between their load-free position and their load-receiving position.

5. Transfer station (1) according to any of the preceding claims,
wherein each runner (7; 57) has a chassis which is adjustable in vertical direction, on which the rollers (15; 65) are rotatably mounted.

6. Transfer station (1) according to claim 5,
wherein the chassis has a coupling drive with a plurality of synchronously movable oscillations (17; 67), on which the rollers (15; 65) are arranged, wherein preferably the coupling oscillations (17; 67) are synchronised with one another, preferably by means of at least one coupling rod (19; 69a, b), which is deflected by the actuator (39; 82) when the drive portal is connected to the runners (7, 57).

7. Transfer station (1) according to any of the preceding claims,
wherein the connection points have corresponding positioning elements (21, 22; 71, 72), which can be moved into engagement with one another by moving the drive portal (5) in vertical direction and in engagement determine the position of the runners (7; 57) relative to the drive portal (5) in the direction of the longitudinal axis (A).

8. Transfer station (1) according to any of the preceding claims,
wherein the runners (7; 57) are formed in the direction of the longitudinal axis (A) respectively of two or more segments (7a, 7b), wherein preferably each of the segments (7a, 7b) has one or more rollers (15; 65) which can move back and forth between the load-free position and load receiving position.

9. Transfer station (1) according to any of claims 6 to 8,
wherein the coupling rod (19; 69a, b) consists of a plurality of coupling rod segments which can be coupled reversibly to one another in the direction of the longitudinal axis (A), wherein each runner segment (7a, 7b) has a coupling rod segment, and the rollers (15; 65) of each segment (7a, 7b) are synchronised by means of the coupling rod segment assigned thereto with the rollers of the segment or the other segments.

10. Logistics system (100) for quickly loading goods pallets (200) between a storage space and a loading surface (201) of a vehicle, with
- a picking station (10), which is configured for receiving and providing a plurality of goods pallets (200) arranged in a row in longitudinal direction,
- a parking station for the loading surface (201) of the vehicle, and
- a transfer station (1) according to any of the preceding claims.

11. Logistics system (100) according to claim 10,
wherein the transfer station (1) has an electronic control unit which is configured,
to align the goods pallet receiving area (3) with a plurality of goods pallets (200) arranged in a row, and/or
to couple the drive portal (5) to the first end section (11) of the runners (7; 57) and/or to move the runners (7; 57) underneath the goods pallets (200) arranged in a row by moving the drive portal along the longitudinal axis, and/or
to move the rollers (15, 65) of the runners (7; 57) from the load-free position into the load receiving position by means of an actuator, so that the goods pallets (200) are raised and/or
to pull the goods pallets (200) by means of the runners (7; 57) into the goods pallet receiving area (3), and/or
to align the goods pallet receiving area (3) with the loading surface (201) of the vehicle, and/or
to uncouple the drive portal (5) from the first end section (11) and couple it to the second end section (13) of the runners (7; 57) and/or
to move the goods pallets (200) from the goods pallet receiving area (3) onto the loading surface (201) of the vehicle, and/or
to lower the goods pallets (200) on the loading surface (201) by moving the rollers (15, 65) from the load receiving position into the load-free position.

12. Logistics system (100) according to claim 10 or 11,
wherein guiding means are arranged, which are close to the ground, adjacent to the goods pallet receiving area (3) in the direction of the longitudinal axis (A).

13. Method for the quick loading of goods pallets, by means of a transfer station (1) according to any of claims 1 to 9,
comprising:
- providing a plurality of goods pallets (200), which are arranged in a row along a longitudinal axis (A), at a picking station,
- coupling a drive portal (5) to a plurality of runners (7; 57),
- moving the runners (7; 57) by means of the drive portal (5) out of a goods pallet receiving area (3) underneath the goods pallets (200), and taking hold of the goods pallets (200) by means of the runners (7; 57), and
- moving the runners (7; 57) together with the goods pallets (200) into the goods pallet receiving area (3).

14. Method according to claim 13,
comprising:
- moving a number of rollers (15, 65), which are provided on the underside of the runners (7; 57), from a drawn-in load-free position into a moved out load receiving position, after the runners (7; 57) have been moved underneath the goods pallets, preferably synchronously, particularly preferably by means of an actuator (39; 82) provided on the drive portal (5) and in operative connection in the coupled state with the coupling rod (19; 69a, b).

15. Method according to claim 13 or 14,
comprising one, several or all of the steps:
- aligning the goods pallet receiving area (3) with the goods pallets (200), before the step of moving out the runners (7; 57),
- aligning the goods pallet receiving area (3) together with the goods pallets (200) with the loading surface (201) of a vehicle, after the step of moving in the runners (7; 57),
- driving the runners (7; 57) together with the goods pallets (200) out of the goods pallet receiving area (3) to the loading surface (201) of a vehicle or trailer, after the step of aligning with the loading surface (201),
- detecting the approach of the runners (7; 57) to a wall of the loading surface (201), and stopping the moving out of the runners (7; 57), as soon as a predefined distance is not reached between the runners (7; 57) and the wall of the loading surface (201).

## Revendications

1. Poste de transfert (1) servant à charger rapidement des palettes de marchandises (200) dans un système logistique (100), avec
- un système de réception de palettes de marchandises (3), qui est adapté pour recevoir de manière simultanée plusieurs palettes de marchandises (200) alignées les unes par rapport aux autres le long d'un axe longitudinal (A),
- un portique d'entraînement (5), qui peut être déplacé dans le système de réception de palettes de marchandises (3) en hauteur et le long de l'axe longitudinal (A),
**caractérisé par**
- une multitude de patins (7 ; 57) servant à détecter les palettes de marchandises (200), qui peuvent être coulissés le long de l'axe longitudinal (A) à l'intérieur et au moins en partie à l'extérieur de la zone de réception, dans lequel
- les patins (7, 57) présentent respectivement une première section d'extrémité (11) et une seconde section d'extrémité (13) opposée en direction de l'axe longitudinal (A), et présentent dans la section d'extrémité (11, 13) respective un raccordement servant au couplage amovible et réversible au portique d'entraînement (5).

2. Poste de transfert (1) selon la revendication 1, dans lequel le portique d'entraînement (5) pour chaque patin (7 ; 57) présente un raccordement côté portique correspondant aux raccordements côté patin.

3. Poste de transfert (1) selon la revendication 1 ou 2,
dans lequel les patins (7 ; 57) présentent côté inférieur respectivement un nombre de rouleaux (15 ; 65), qui peuvent être déplacés en va-et-vient entre une position sans charge rentrée et une position de réception de charges sortie.

4. Poste de transfert (1) selon la revendication 3, dans lequel respectivement le raccordement côté portique présente un actionneur (39 ; 82) servant à déplacer les rouleaux (15 ; 65) entre leur position sans charge et leur position de réception de charges.

5. Poste de transfert (1) selon l'une quelconque des revendications précédentes,
dans lequel chaque patin (7 ; 57) présente un train de roulement pouvant être ajusté dans la direction verticale, au niveau duquel les rouleaux (15 ; 65) sont montés de manière à pouvoir tourner.

6. Poste de transfert (1) selon la revendication 5,
dans lequel le train de roulement présente un mécanisme de couplage avec plusieurs bras oscillants (17 ; 67) pouvant être déplacés de manière synchrone, au niveau desquels les rouleaux (15 ; 65) sont disposés, dans lequel de préférence les bras oscillants de couplage (17 ; 67) sont synchronisés les uns avec les autres de préférence au moyen d'au moins une tige de couplage (19 ; 69a, b), laquelle est déviée par l'actionneur (39 ; 82), quand le portique d'entraînement (5) est relié aux patins (7, 57).

7. Poste de transfert (1) selon l'une quelconque des revendications précédentes,
dans lequel les raccordements présentent des éléments de positionnement (21, 22 ; 71, 72) correspondants les uns aux autres, lesquels peuvent être amenés en prise les uns avec les autres par le déplacement du portique d'entraînement (5) dans la direction verticale et fixent, en prise, la position des patins (7 ; 57) par rapport au portique d'entraînement (5) en direction de l'axe longitudinal (A).

8. Poste de transfert (1) selon l'une quelconque des revendications précédentes,
dans lequel les patins (7 ; 57) sont formés en direction de l'axe longitudinal (A) respectivement à partir de deux segments (7a, 7b) ou plus, dans lequel de préférence chacun des segments (7a, 7b) présente un ou plusieurs rouleaux (15 ; 65) pouvant être déplacés en va-et-vient entre la position sans charge et la position de réception de charges.

9. Poste de transfert (1) selon l'une quelconque des revendications 6 à 8,
dans lequel la tige de couplage (19 ; 69a, b) est constituée de plusieurs segments de tige de couplage pouvant être couplés les uns aux autres de manière réversible en direction de l'axe longitudinal (A), dans lequel chaque segment de patin (7a, 7b) présente un segment de tige de couplage, et les rouleaux (15 ; 65) de chaque segment (7a, 7b) sont synchronisés au moyen du segment de tige de couplage qui leur est associé avec les rouleaux du ou des segments restants.

10. Système logistique (100) servant à charger rapidement des palettes de marchandises (200) entre un entrepôt et une surface de chargement (201) d'un véhicule, avec
- un emplacement de préparation de commandes (101), lequel est conçu pour recevoir et fournir une multitude de palettes de marchandises (200) alignées les unes par rapport aux autres dans une direction longitudinale,
- un emplacement de pose pour la surface de chargement (201) du véhicule, et
- un poste de transfert (1) selon l'une quelconque des revendications précédentes.

11. Système logistique (100) selon la revendication 10,
dans lequel le poste de transfert (1) présente une unité de commande électronique, qui est conçue
pour orienter le système de réception de palettes de marchandises (3) sur une multitude de palettes de marchandises (200) alignées les unes par rapport aux autres, et/ou
pour coupler le portique d'entraînement (5) à la première section d'extrémité (11) des patins (7 ; 57), et/ou
pour déplacer les patins (7 ; 57) sous les palettes de marchandises (200) alignées les unes par rapport aux autres au moyen d'un déplacement du portique d'entraînement le long de l'axe longitudinal, et/ou
pour déplacer les rouleaux (15, 65) des patins (7 ; 57) depuis la position sans charge dans la position de réception de charges au moyen d'un actionneur de sorte que les palettes de marchandises (200) sont soulevées, et/ou
pour tirer les palettes de marchandises (200) au moyen des patins (7 ; 57) dans le système de réception de palettes de marchandises (3), et/ou
pour orienter le système de réception de palettes de marchandises (3) sur la surface de chargement (201) du véhicule et/ou
pour découpler le portique d'entraînement (5) de la première section d'extrémité (11) et pour le coupler à la seconde section d'extrémité (13) des patins (7 ; 57), et/ou
pour déplacer les palettes de marchandises (200) depuis le système de réception de palettes de marchandises (3) sur la surface de chargement (201) du véhicule, et/ou
pour abaisser les palettes de marchandises (200) sur la surface de chargement (201) en déplaçant les rouleaux (15, 65) depuis la position de réception de charges dans la position sans charge.

12. Système logistique (100) selon la revendication 10 ou 11,
dans lequel des moyens de guidage proches du sol sont disposés de manière adjacente au système de réception de palettes de marchandises (3) en direction de l'axe longitudinal (A).

13. Procédé servant à charger rapidement des palettes de marchandises au moyen d'un poste de transfert (1) selon l'une quelconque des revendications 1 à 9, comprenant :
- la fourniture de plusieurs palettes de marchandises (200) alignées les unes par rapport aux autres le long d'un axe longitudinal (A) au niveau d'un emplacement de préparation de commandes,
- le couplage d'un portique d'entraînement (5) à une multitude de patins (7 ; 57),
- la manœuvre de sortie des patins (7 ; 57) au moyen du portique d'entraînement (5) hors d'un système de réception de palettes de marchandises (3) sous les palettes de marchandises (200), et la détection des palettes de marchandises (200) au moyen des patins (7 ; 57), et
- la manœuvre de rentrée des patins (7 ; 57) y compris des palettes de marchandises (200) dans le système de réception de palettes de marchandises (3).

14. Procédé selon la revendication 13,
comprenant :
- le déplacement d'un nombre de rouleaux (15, 65), qui sont prévus côté inférieur au niveau des patins (7 ; 57), depuis une position sans charge rentrée dans une position de réception de charges sortie, après que les patins (7 ; 57) ont été déplacés sous les palettes de marchandises, de préférence de manière synchrone, de manière particulièrement préférée au moyen d'un actionneur (39 ; 82) prévu au niveau du portique d'entraînement (5) et en liaison active dans l'état couplé avec la tige de couplage (19 ; 69a, b).

15. Procédé selon la revendication 13 ou 14, comprenant une, plusieurs ou toutes les étapes suivantes :
- orientation du système de réception de palettes de marchandises (3) sur les palettes de marchandises (200) avant l'étape de manœuvre de sortie des patins (7 ; 57),
- orientation du système de réception de palettes de marchandises (3) y compris des palettes de marchandises (200) sur la surface de chargement (201) d'un véhicule après l'étape de manœuvre de rentrée des patins (7 ; 57),
- sortie des patins (7 ; 57) y compris des palettes de marchandises (200) hors du système de réception de palettes de marchandises (3) sur la surface de chargement (201) d'un véhicule ou d'une remorque après l'étape d'orientation sur la surface de chargement (201),
- détection du rapprochement des patins (7, 57) d'une paroi de la surface de chargement (201) et arrêt de la manœuvre de sortie des patins (7 ; 57) dès qu'une distance entre les patins (7, 57) et la paroi de la surface de chargement (201) devient inférieure à une distance prédéterminée.
